# EUROPÄISCHE PATENTANMELDUNG

(11) **EP 1 345 013 A1**
(43) Veröffentlichungstag der Anmeldung: **17.09.2003**
(21) Anmeldenummer: 02005868.1
(22) Anmeldetag: 14.03.2002
(51) Int. Cl.: G01F 1/84, G01F 1/74, G01N 9/00

(54) **Gemäss dem Coriolisprinzip arbeitendes Massendurchflussmessgerät mit einer Wirbelmischvorrichtung**

(71) Anmelder: Endress + Hauser Flowtec AG, CH-4153 Reinach BL 1 (CH)
(72) Erfinder: Rieder, Alfred Dr., 84032 Landshut (DE); Drahm, Wolfgang Dr., 85435 Erding (DE)
(74) Vertreter: Andres, Angelika

(57) **Zusammenfassung**

Der Meßaufnehmer (10) dient dem Erzeugen eines Meßsignals (s₁, s₂), das mit wenigstens einem physikalischen Parameter eines in einer Rohrleitung strömenden Fluids korrespondiert. Dazu umfaßt der Meßaufnehmer (10) wenigstens ein Meßrohr (13) von vorgebbarem Meßrohrlumen zum Führen des Fluids, wobei das Meßrohr (13) einlaßseitig und auslaßseitig mit der Rohrleitung kommuniziert. Eine Erregeranordnung (16) bewirkt im Betrieb sensorisch erfaßbare Reaktionen, insb. inform von Reaktionskräften, im Fluid innerhalb des wenigstens einen Meßrohrs (13), die wiederum mittels einer Sensoranordnung (60) erfaßt und in die Reaktionen im Fluid repräsentierende Meßsignale (s₁, s₂) umgewandelt werden. Zum Erzeugen einer möglichst rotationssymmetrischen Dichteverteilung im Fluid sind ferner in einem Einlaßbereich des Meßaufnehmers (10) oder zumindest in dessen Nähe Mittel vorgesehen, die einen Drall im einströmenden Fluid und somit im innerhalb des Meßrohrlumens strömenden Fluid eine Rotationsbewegung relativ zum Meßrohr (13) um eine in Strömungsrichtung liegende imaginäre Rotationsachse bewirken. Aufgrund der so erzeugten rotationssymmetrischen Dichteverteilung liefert der Meßaufnehmer (10) auch bei inhomogenen, insb. mehrphasigen, Fluiden, insb. auch weitgehend unabhängig von der Einbaulage des Meßrohrs (13) genaue und robuste Meßsignale.

## Beschreibung

Die Erfindung betriftt einen Meßaufnehmer sowie ein Verfahren zum Messen von wenigstens einem physikalischen Parameter, insb. eines Massedurchflusses und/oder einer Dichte und/oder einer Viskosität, eines in einer Rohrleitung strömenden, insb. mehrphasigen, Fluids.

In der Prozeßmeß- und Automatisierungstechnik werden für die Messung physikalischer Parameter eines in einer Rohrleitung strömenden Fluids, wie z.B. dem Massedurchfluß, der Dichte und/oder der Viskosität, oftmals solche Meßgeräte verwendet, die mittels eines vom Fluid durchströmten Meßaufnehmers vom Vibrationstyp und einer daran angeschlossenen Meß- und Betriebsschaltung, im Fluid Reaktionskräfte, wie z.B. mit dem Massedurchfluß korrespondierende Corioliskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Vikosität und/oder ein die jeweilige Dichte des Fluids repräsentierendes Meßsignal erzeugen.

Derartige Meßaufnehmer vom Vibrationstyp sind z.B. in der WO-A 01/33 174, der WO-A 00/57 141, der WO-A 98/07 009, der WO-A 95/16 897, der WO-A 88/03 261, der US-A 60 06 609, der US-A 57 96 011, der US-A 53 01 557, der US-A 48 76 898, der US-A 45 24 610, der EP-A 553 939 oder der EP-A 1 001 254 beschrieben.

Zum Führen des Fluids umfassen die Meßaufnehmer jeweils mindestens ein in einem Trägerrahmen gehaltertes Meßrohr mit einem gebogenen oder geraden Rohrsegment, das zum Erzeugen oben genannter Reaktionskräfte, angetrieben von einer elektromechanischen Erregeranordnung, im Betrieb vibrieren gelassen wird. Zum Erfassen, insb. einlaßseitger und auslaßseitiger, Vibrationen des Rohrsegments weisen die Meßaufnehmer ferner jeweils eine auf Bewegungen des Rohrsegments reagierende Sensoranordnung auf.

Neben derartigen Meßaufnehmern vom Vibrationstyp werden in der Prozeßmeß- und Automatisierungstechnik für die In-Line-Messungen häufig auch Meßgeräte mit magnetisch-induktiven Meßaufnehmern oder mit Ultraschall-Meßaufnehmern eingesetzt. Da der prinzipielle Aufbau und die Funktionsweise solcher magnetisch-induktiven Meßaufnehmer z.B. in der EP-A 1 039 269, US-A 60 31 740, US-A 55 40 103, US-A 53 51 554, US-A 45 63 904 etc. oder solcher Ultraschall-Meßaufnehmer z.B. US-B 63 30 831, US-B 62 93 156, US-A 51 31 279, US-A 47 87 252 etc. hinlänglich beschrieben sind, kann an dieser Stelle auf eine detailliertere Erläuterung verzichtet werden.

Bei der Verwendung von In-Line-Meßaufnehmern der beschriebenen Art hat es sich jedoch gezeigt, daß bei inhomogenen Fluiden, insb. mehrphasigen Fluiden, die dort erzeugten Meßsignale trotz, insb. auch unter Laborbedingungen, praktisch konstantgehaltener Viskosität und Dichte in erheblichem Maße nicht reproduzierbaren Schwankungen unterliegen und somit für die Messung des jeweiligen physikalischen Parameters praktisch unbrauchbar werden können.

In der US-A 45 24 610 wird bereits eine mögliche Ursache dieses Problems für den Betrieb von Vibrationstyp-Meßaufnehmern angedeutet, nämlich der Umstand, daß sich vom Fluid in das Meßrohr eingetragene parasitäre Inhomogenitäten, wie z.B. Gasblasen, an dessen Innenwand anlagern können. Zur Umgehung des Problems wird ferner vorgeschlagen, den Meßaufnehmer so einzubauen, daß das gerade Meßrohr im wesentlichen senkrecht verläuft und somit ein Anlagern solcher parasitärer, insb. gasförmiger, Inhomogenitäten verhindert wird. Hierbei handelt es sich jedoch um eine sehr spezielle und, insb. in der industriellen Prozeßmeßtechnik, nur sehr bedingt realisierbare Lösung. Zum einen müßte nämlich für diesen Fall die Rohrleitung, in die der Meßaufnehmer eingefügt werden soll, ggf. an diesen angepaßt werden und nicht umgekehrt, was dem Anwender wohl eher nicht zu vermitteln ist. Zum anderen kann es sich bei den Meßrohren, wie bereits erwähnt, auch um solche mit einer gekrümmten Rohrform handeln, so daß das Problem auch durch eine Anpassung der Einbaulage nicht gelöst werden kann. Es hat sich hierbei außerdem gezeigt, daß die vorgenannten Verfälschungen des Meßsignals auch bei Verwendung eines senkrecht eingebauten, geraden Meßrohrs nicht wesentlich verringert werden können. Außerdem lassen sich die im weiteren festgestellten Schwankungen des so erzeugten Meßsignals bei strömendem Fluid auf diese Weise ebenfalls nicht verhindern.

Eine Aufgabe der Erfindung besteht daher darin, ein Verfahren sowie einen Meßaufnehmer anzugeben, das bzw. der auch bei inhomogenen, insb. mehrphasigen, Fluiden möglichst unabhängig von der momentanen Dichteverteilung innerhalb des in der angeschlossenen Rohrleitung strömenden Fluids, insb. aber auch weitgehend unabhängig von der Konzentration allfälliger parasitärer Inhomogenitäten, und auch möglichst unabhängig von der Einbaulage des Meßrohrs genaue, zumindest aber gut reproduzierbare und weitgehend robuste Meßsignale liefert.

Zur Lösung der Aufgabe besteht die Erfindung in einem Verfahren zum Messen von wenigstens einem physikalischen Parameter, insb. eines Massedurchflusses und/oder einer Dichte und/oder einer Viskosität, eines in einer Rohrleitung strömenden Fluids, welches Verfahren folgende Schritte umfaßt:
- Bewirken eines Dralls im strömenden Fluid um eine mit einer Strömungsrichtung fluchtende Drallachse zum Erzwingen einer zur Drallachse möglichst rotationssymmetrischen Dichteverteilung im Fluid,
- Strömenlassen des um die Drallachse rotierenden Fluids durch wenigstens ein Meßrohr eines in die Rohrleitung eingefügten Meßaufnehmers zum Erzeugen von mit dem zu messenden Parameter korrespondierenden Reaktionen im Fluid sowie
- Erfassen von Reaktionen im Fluid zum Erzeugen wenigstens eines vom zu messenden Parameter beeinflußten Meßsignals.

Des weiteren besteht die Erfindung in einem Meßaufnehmer zum Erzeugen eines Meßsignals, das mit wenigstens einem physikalischen Parameter eines in einer Rohrleitung strömenden Fluids korrespondiert, welcher Meßaufnehmer umfaßt:
- wenigstens ein Meßrohr zum Führen des Fluids, welches Meßrohr einlaßseitig und auslaßseitig mit der Rohrleitung kommuniziert und
- eine Erregeranordnung zum Bewirken von sensorisch erfaßbaren Reaktionen im Fluid innerhalb des wenigstens einen Meßrohrs sowie
- eine Sensoranordnung zum Erfassen der Reaktionen im Fluid und zum Erzeugen des Meßsignals,
- wobei in einem Einlaßbereich des Meßaufnehmers oder zumindest in dessen Nähe Mittel vorgesehen sind, die einen Drall im einströmenden Fluid und somit im innerhalb des Meßrohrlumens strömenden Fluid eine Rotationsbewegung relativ zum Meßrohr um eine in Strömungsrichtung liegende imaginäre Rotationsachse bewirken.

Außerdem besteht die Erfindung in einem Meßgerät zum Messen wenigstens eines physikalischen Parameters eines in einer Rohrleitung strömenden Fluids, insb. geeignet zur Realisierung des erfindungsgemäßen Verfahrens mit einem solchen Meßaufnehmer.

Nach einer bevorzugten Ausgestaltung des Verfahrens der Erfindung wird das Fluid führende Meßrohr zum Erzeugen von mit dem zu messenden Parameter korrespondierenden, auf das vibrierende Meßrohr zurückwirkenden Reaktionskräften im zu messenden Fluid vibrierengelassen und werden Vibrationen des Meßrohrs zum Erzeugen des wenigstens einen Meßsignals erfaßt.

Nach einer bevorzugten ersten Ausgestaltung des Meßaufnehmers der Erfindung kommuniziert das wenigstens eine Meßrohr über ein einlaßseitiges Einlaßrohrstück und über ein auslaßseitiges Auslaßrohrstück mit der Rohrleitung und sind die Mittel zum Bewirken des Dralls zumindest anteilig innerhalb des Einlaßrohrstücks angeordnet.

Nach einer bevorzugten zweiten Ausgestaltung des Meßaufnehmers der Erfindung sind die Mittel zum Bewirken des Dralls zumindest anteilig innerhalb des wenigstens einen Meßrohrs angeordnet.

Nach einer bevorzugten dritten Ausgestaltung des Meßaufnehmers der Erfindung sind die Mittel zum Bewirken des Dralls zumindest anteilig innerhalb der Rohrleitung angeordnet.

Nach einer bevorzugten vierten Ausgestaltung des Meßaufnehmers der Erfindung umfassen die Mittel zum Bewirken des Dralls wenigstens einen in das strömende Fluid hineinragenden, insb. ruhenden, Verwirbler.

Nach einer bevorzugten fünften Ausgestaltung des Meßaufnehmers der Erfindung umfaßt der Verwirbler wenigstens ein in das strömende Fluid hineinragendes Leitblech.

Nach einer bevorzugten sechsten Ausgestaltung des Meßaufnehmers der Erfindung ist der Verwirbler propellerförmig ausgebildet.

Nach einer bevorzugten siebenten Ausgestaltung des Meßaufnehmers der Erfindung ist der Verwirbler helixförmig ausgebildet.

Nach einer bevorzugten achten Ausgestaltung des Meßaufnehmers der Erfindung ist der Verwirbler schneckenförmig ausgebildet.

Nach einer bevorzugten neunten Ausgestaltung des Meßaufnehmers der Erfindung sind die Mittel zum Bewirken des Dralls an der Innenwand des Einlaßrohrstücks und/oder an der Innenwand des Meßrohrs fixiert.

Nach einer bevorzugten zehnten Ausgestaltung des Meßaufnehmers der Erfindung sind die Mittel zum Bewirken des Dralls gegen die Innenwand des Einlaßrohrstücks und/oder die Innenwand des Meßrohrs gedrückt gehalten.

Nach einer bevorzugten elften Ausgestaltung des Meßaufnehmers der Erfindung sind die Mittel zum Bewirken des Dralls als in die Innenwand des Einlaßrohrstücks und/oder in die Innenwand des Meßrohrs eingeformter Zug ausgebildet.

Nach einer bevorzugten zwölften Ausgestaltung des Meßaufnehmers der Erfindung weisen die Mittel zum Bewirken des Dralls in Strömungsrichtung eine wirksame Länge auf, die mindestens gleich einer Nennweite der Rohrleitung ist.

Nach einer bevorzugten dreizehnten Ausgestaltung der Erfindung ist der Meßaufnehmer in den Verlauf einer im wesentlichen waagerechten Rohrleitung eingebaut.

Nach einer bevorzugten vierzehnten Ausgestaltung der Erfindung ist der Meßaufnehmer in den Verlauf einer im wesentlichen senkrechten Rohrleitung eingebaut.

Nach einer bevorzugten fünfzehnten Ausgestaltung des Meßaufnehmers der Erfindung wird das wenigstens eine Meßrohr im Betrieb zum Erzeugen von im Fluid wirkenden Reaktionskräften mittels der Erregeranordnung vibrierengelassen und werden mittels der Sensoranordnung Vibrationen des Meßrohrs erfaßt.

Nach einer bevorzugten ersten Ausgestaltung des Meßgeräts der Erfindung ist der zu messende physikalische Parameter ein Massendurchfluß.

Nach einer bevorzugten zweiten Ausgestaltung des Meßgeräts der Erfindung ist der zu messende physikalische Parameter eine Dichte.

Nach einer bevorzugten dritten Ausgestaltung des Meßgeräts der Erfindung ist der zu messende physikalische Parameter eine Viskosität.

Ein Grundgedanke der Erfindung besteht darin, mittels der Rotationsbewegung um die Drallachse im Fluid Zentrifugalkräfte zu induzieren, die so ausgebildet sind, daß zumindest innerhalb des Meßrohrlumens eine bezüglich der Drallachse der rotierenden "Fluidsäule" möglichst rotationssymmetrische und somit weitgehend reproduzierbare Dichteverteilung erzwungen wird. Eine allfällige geringe Verfälschung im Meßergebnis, insb. im Dichte-Meßwert, die vor allem bei Flüssigkeiten mit parasitären gasförmigen Inhomogenitäten aufgrund der dann aus den Zentrifugalkräften resultierenden Konzentration solcher Gaseinschlüsse im Zentrum des Meßrohrlumens zu erwarten ist, kann im Vergleich zu den vorbeschriebenen nicht reproduzierbaren Schwankungen durchaus als vernachlässigbar klein eingeschätzt werden.

Die Erfindung beruht dabei insb. auch auf der Erkenntnis, daß die oben beschriebenen Schwankungen der Meßsignale nicht allein darauf zurückzuführen sind, daß sich z.B. Gasblasen an der Innenwand des Meßrohrs anlagern, sondern insb. darauf, daß dies im wesentlichen chaotisch und somit praktisch nicht reproduzierbar oder vorhersagbar erfolgt. Anders gesagt, die Schwankungen der Meßsignale bei der Verwendung herkömmlicher Meßaufnehmer mit geraden oder schwach gebogenen Meßrohren für inhomogene, insb. mehrphasige, Fluide können in einem erheblichen Maße auf die im wesentlichen chaotische Verteilung von Inhomogenitäten im Fluid, wie z.B. allfällig eingeperlte Gasblasen, und daraus resultierend auf eine sich stets ändernde jedoch praktisch nicht detektierbare Dichteverteilung innerhalb des Fluids im Meßrohrlumen zurückgeführt werden.

Ein Vorteil des Erfindung, insb. auch des erfindungsgemäßen Verfahrens, besteht darin, daß es praktisch für alle bekannten In-Line-Meßaufnehmer, insb. auch alle Durchflußmeßprinzipien, angewendet werden und dementsprechend sowohl in Meßaufnehmern vom Vibrationstyp als auch z.B. in magnetisch-induktive Meßaufnehmer oder in Ultraschall-Meßaufnehmer eingesetzt werden kann.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Angabe bereits vergebener Bezugszeichen in nachfolgenden Figuren verzichtet.
- Fig. 1: zeigt in einer Seitenansicht ein Meßgerät zum Messen wenigstens eines physikalischen Parameters eines in einer Rohrleitung strömenden Fluids,
- Fig. 2: zeigt perspektivisch in einer ersten Seitenansicht ein Ausführungsbeispiel eines für das Meßgerät von Fig. 1 geeigneten Meßaufnehmers vom Vibrations-Typ,
- Fig. 3: zeigt den Meßaufnehmer von Fig. 3 perspektivisch in einer zweiten Seitenansicht,
- Fig. 4: zeigt ein Ausführungsbeispiel einer für den Meßaufnehmer von Fig. 2 und 3 geeigneten elektro-mechanischen Erregeranordnung und
- Fig. 5a: zeigt Ausgestaltungen erfindungsgemäßer Mittel zum
- bis 5d: Bewirken eines Dralls im zu messenden Fluid.

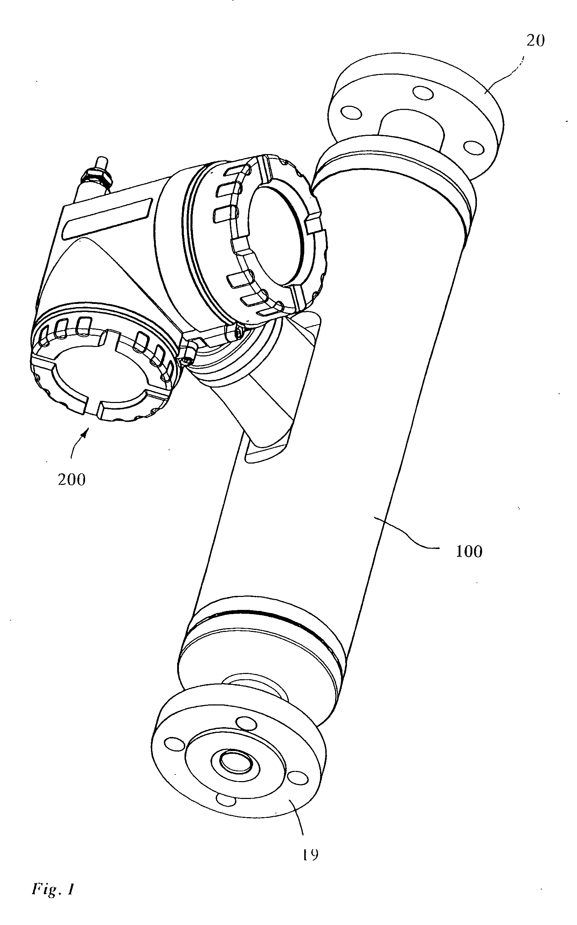

In der Fig. 1 ist ein Meßgerät mit einem, bevorzugt in einem Wandlergehäuse 100 untergebrachten, Meßaufnehmer 10 sowie einer - hier nicht gezeigten - in einem Elektronikgehäuse 200 untergebrachten und mit dem Meßaufnehmer 10 elektrisch verbundenen Meßgerät-Elektronik schematisch dargestellt. Das Meßgerät dient insb. dazu, einen physikalischen Parameter eines in einer, hier nicht gezeigten, Rohrleitung strömenden Fluids, insb. einen Massedurchfluß m und/oder eine Dichte p und/oder eine Viskosität, η, zu erfassen und in einen diesen Parameter momentan repräsentierenden Meßwert abzubilden. Ferner kann das Meßgerät aber z.B. auch dazu dienen, ein Volumenstrom des Fluids zu messen.

Zu diesem Zweck werden im Betrieb mittels des von der Meßgerät-Elektronik angetriebenen Meßaufnehmers 10 im hindurchströmenden Fluid solche Reaktionen erzeugt, die vom zu messenden Parameter abhängig sind und die meßbar, also sensorisch erfaßbar und elektronisch auswertbar, auf den Meßaufnehmer 10 zurückwirken. Solche Reaktionen können z.B. volumenstromabhängige magnetisch-induktiv erzeugte elektrische Spannungen, massedurchflußabhängige Corioliskräfte, dichteabhängige Massenträgheitskräfte und/oder viskositätsabhängige Reibungs- oder auch Dämpfungskräfte etc. sein.

Für den bevorzugten Fall, daß das Meßgerät für eine Ankopplung an einen Feldbus vorgesehen ist, weist die, insb. programmierbare, Meßgerät-Elektronik eine entsprechende Kommunikations-Schnittstelle für eine Datenkommunikation auf, z.B. zum Senden der Meßdaten an eine übergeordnete speicherprogrammierbare Steuerung oder ein übergeordnetes Prozeßleitsystem, auf.

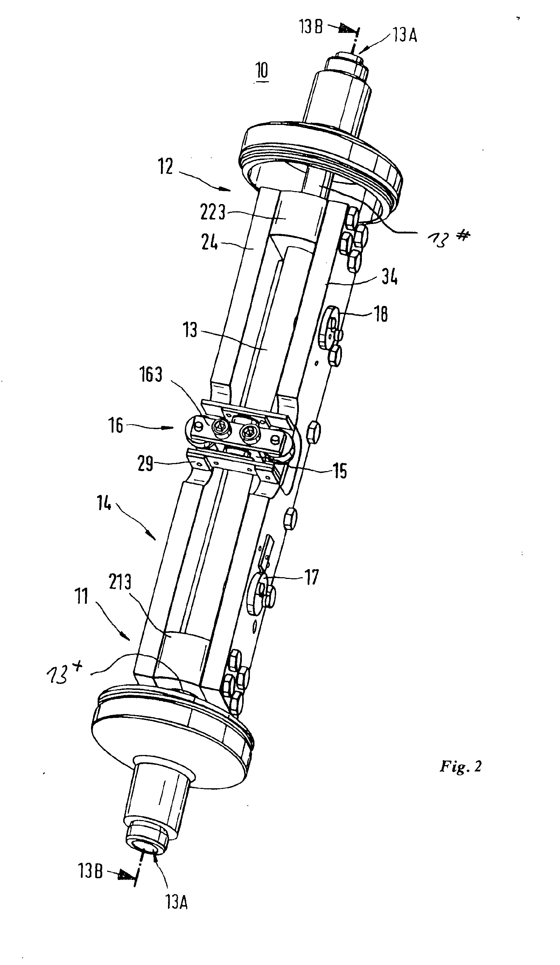

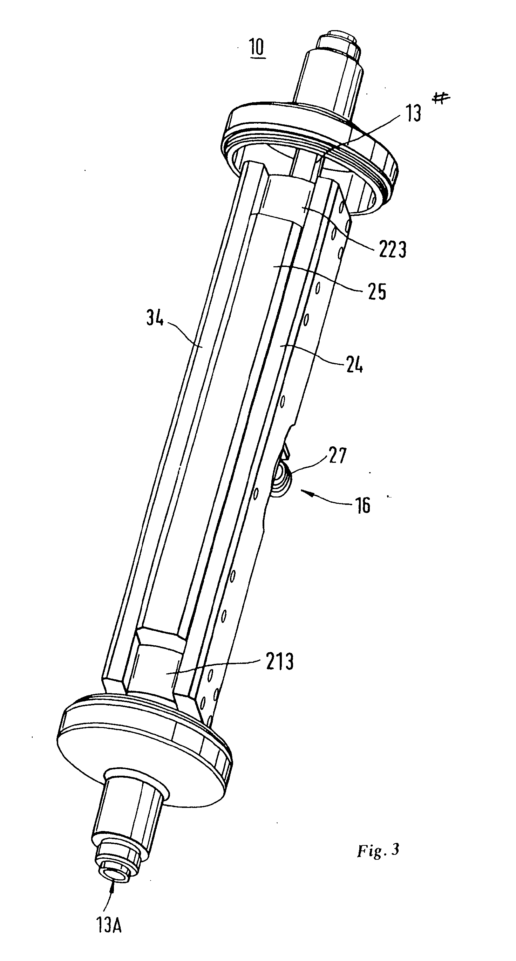

In den Fig. 2 und 3 ist ein Ausführungsbeispiel einer als ein Meßaufnehmer 10 dienenden physikalisch-elektrischen Wandleranordnung vom Vibrationstyp gezeigt. Der Aufbau einer derartigen Wandleranordnung ist z.B. in der US-A 60 06 609 ausführlich beschrieben. Ferner werden derartige Meßaufnehmer bereits in marktüblichen Coriolis-Massedurchfluß/ Dichtemeßgeräten verwendet, wie sie z.B. auch von der Anmelderin selbst mit der Serie "PROMASS l" angeboten werden.

Zum Führen des zu messenden Fluids umfaßt der Meßaufnehmer 10 wenigstens ein ein Einlaßende 11 und ein Auslaßende 12 aufweisendes Meßrohr 13 von vorgebbarem, elastisch verformbaren Meßrohrlumen 13A und von vorgebbarer Nennweite. Elastisches Verformen des Meßrohrlumens 13A bedeutet hier, daß zum Erzeugen von fluidinternen und somit das Fluid beschreibenden Reaktionskräften, nämlich von Scher- oder auch Reibungskräften, aber auch von Corioliskräften und/oder Masseträgheitskräften, im Betrieb des Meßaufnehmers 10 eine Raumform und/oder eine Raumlage des Meßrohrlumens 13A innerhalb eines Elastizitätsbereiches des Meßrohrs 13 in vorgebbarer Weise zyklisch, insb. periodisch, verändert wird, vgl. z.B. die US-A 48 01 897, die US-A 56 48 616, die US-A 57 96 011 und/oder die US-A 60 06 609.

Es sei an dieser Stelle darauf verwiesen, daß zur Realisierung der Erfindung anstelle eines Meßaufnehmers gemäß dem Ausführungsbeispiel von Fig. 2 und 3 praktisch jeder der dem Fachmann bereits für Coriolis-Massedurchfluß/Dichtemeßgeräte bekannten Meßaufnehmer, insb. auch ein solcher vom Biegeschwingungstyp mit ausschließlich oder zumindest anteilig in einem Biegeschwingungsmode vibrierendem, gebogenem oder geradem Meßrohr, verwendet werden kann. Weitere geeignete Ausführungsformen für solche als Meßaufnehmer 10 dienende Wandleranordnungen sind z.B. in der US-A 53 01 557, der US-A 53 57 811, der US-A 55 57 973, der US-A 56 02 345, der US-A 56 48 616 oder in der US-A 57 96 011 ausführlich beschrieben, deren Offenbarung als zur Offenbarung dieser Anmeldung zugehörig erachtet wird. Ferner können z.B. auch dem Fachmann bekannte magnetisch-induktive Meßaufnehmer oder auch Ultraschall-Meßaufnehmer verwendet werden.

Als Material für das, hier im wesentlichen gerade, Meßrohr 13 sind z.B. Titanlegierungen besonders geeignet. Anstelle von Titanlegierungen können aber auch andere für derartige, insb. auch für gebogene, Meßrohre üblicherweise verwendete Materialien wie z.B. rostfreier Stahl, Tantal oder Zirconium etc. verwendet werden.

Das Meßrohr 13, welches in der üblichen Weise über ein Einlaßrohrstück 13⁺ und über ein Auslaßrohrstück 13^{#} mit der das Fluid zu- bzw. abführende Rohrleitung kommuniziert, ist in einen starren, insb. biege- und verwindungssteifen, und bevorzugt von einem Wandlergehäuse 100 umhüllten Tragrahmen 14 schwingfähig eingespannt. Das Meßrohr 13 sowie das Einlaßund das Auslaßrohrstück 13⁺, 13^{#} sind bevorzugt einstückig mittels eines einzigen rohrförmigen Halbzeugs gefertigt; falls erforderlich können sie selbstverständlich auch mehrstückig sein.

Der Tragrahmen 14 ist am Einlaßrohrstück 13⁺ mittels einer Einlaßplatte 213 und am Auslaßrohrstück 13^{#} mittels einer Auslaßplatte 223 fixiert, wobei letztere beiden jeweils von entsprechenden Verlängerungsstücken des Meßrohrs 13 durchstoßen sind. Des weiteren weist der Tragrahmen 14 eine erste Seitenplatte 24 und eine zweite Seitenplatte 34 auf, welche beiden Seitenplatten 24, 34 derart an der Einlaßplatte 213 und an der Auslaßplatte 223 fixiert sind, daß sie im wesentlichen parallel zum Meßrohr 13 sowie von diesem und voneinander beabstandet angeordnet sind, vgl. Fig. 2 und 3. Somit sind einander zugewandte Seitenflächen der beiden Seitenplatten 24, 34 ebenfalls parallel zueinander.

In vorteilhafter Weise ist ein Längsstab 25 an den Seitenplatten 24, 34 vom Meßrohr 13 beabstandet fixiert, der als Schwingungen des Meßrohrs 13 tilgende Auswuchtmasse dient. Der Längstab 25 erstreckt sich, wie in Fig. 3 dargestellt, praktisch parallel zur gesamten schwingfähigen Länge des Meßrohrs 13; dies ist jedoch nicht zwingend, der Längstab 25 kann selbstverständlich, falls erforderlich, auch kürzer ausgeführt sein.

Der Tragrahmen 14 mit den beiden Seitenplatten 24, 34, der Einlaßplatte 213, der Auslaßplatte 223 und ggf. dem Längsstab 25 hat somit eine Längsschwerelinie, die im wesentlichen parallel zu einer das Einlaßende 11 und das Auslaßende 12 virtuell verbindenden Meßrohrmittelachse 13B verläuft.

In den Fig. 2 und 3 ist durch die Köpfe der gezeichneten Schrauben angedeutet, dass das erwähnte Fixieren der Seitenplatten 24, 34 an der Einlaßplatte 213, an der Auslaßplatte 223 und am Längsstab 25 durch Verschrauben erfolgen kann; es können aber auch andere geeignete und dem Fachmann geläufige Befestigungsarten angewendet werden.

Für den Fall, daß der Meßaufnehmer 10 lösbar mit der Rohrleitung zu montieren ist, ist dem Einlaßrohrstück 13⁺ bevorzugt ein erster Flansch 19 und dem Auslaßrohrstück 13^{#} ein zweiter Flansch 20 angeformt, vgl. Fig. 1; anstelle der Flansche 19, 20 können aber z.B. auch sogenannte, wie in Fig. 2 oder 3 angedeutet, Triclamp-Anschlüsse zur lösbaren Verbindung mit der Rohrleitung dienen. Falls erforderlich kann das Meßrohr 13 aber auch direkt mit der Rohrleitung, z.B. mittels Schweißen oder Hartlötung etc.

Zum Erzeugen oben genannter Reaktionskräfte im Fluid wird das Meßrohr 13 im Betrieb des Meßaufnehmers 10, angetrieben von einer mit dem Meßrohr gekoppelten elektro-mechanischen Erregeranordnung 16, bei einer vorgebbaren Schwingfrequenz, insb. einer auch von einer Dichte, ρ, des Fluids abhängigen natürlichen Resonanzfrequenz, im sogenannten Nutzmode vibrieren gelassen und somit in vorgebbarer Weise elastisch verformt.

Im gezeigten Ausführungsbeispiel wird das vibrierende Meßrohr 13, wie bei solchen Wandleranordnungen vom Biegeschwingungs-Typ üblich, aus einer statischen Ruhelage räumlich, insb. lateral, ausgelenkt; gleiches gilt praktisch auch für solche Wandleranordnungen, bei denen ein oder mehrere gebogene Meßrohre im Betrieb bekanntlich Auslegerschwingungen um eine entsprechende, das jeweilige Einlaß- und Auslaßende virtuell verbindende Längsachse oder auch für solche, bei denen ein oder mehere gerade Meßrohre lediglich ebene Biegeschwingungen um ihre Meßrohrlängsachse ausführen. Für den anderen Fall, daß als Meßaufnehmer 10, wie z.B. in der WO-A 95/16 897 beschrieben, eine Wandleranordnung vom Radialschwingungs-Typ dient und das vibrierende Meßrohr in der dafür üblichen Weise symmetrisch verformt wird, würde letzteres im wesentlichen in seiner statischen Ruhelage belassen.

Die Erregeranordnung 16 dient dazu, unter Umsetzung einer von der Meßgerät-Elektronik eingespeisten, elektrischen Erregerleistung *P*_{*exc*} eine auf das Meßrohr 13 einwirkende Erregerkraft *F*_{*exc*} zu erzeugen. Die Erregerleistung *P*_{*exc*} dient praktisch lediglich zur Kompensation des über mechanische und fluidinterne Reibung dem Schwingungssystem entzogenen Leistungsanteils. Zur Erzielung eines möglichst hohen Wirkungsgrades ist die Erregerleistung *P*_{*exc*} bevorzugt möglichst genau so eingestellt, daß im wesentlichen die Schwingungen des Meßrohrs 13 im Nutzmode, z.B. die mit einer niedrigsten Resonanzfrequenz, aufrecht erhalten werden.

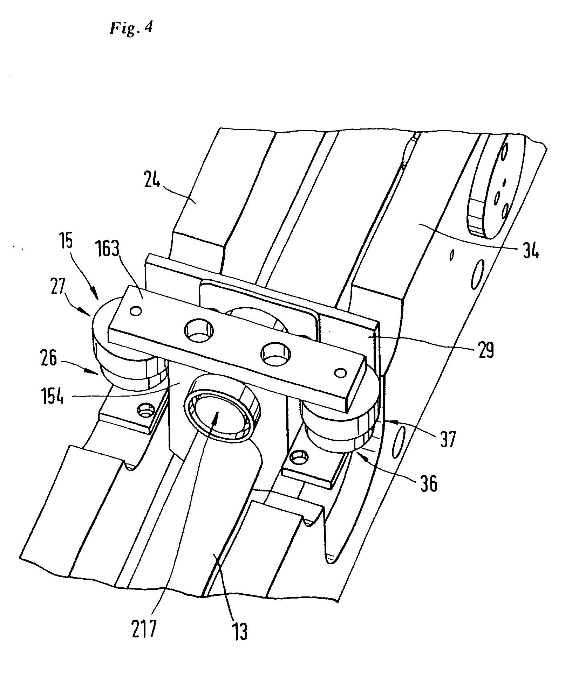

Zum Zwecke des Übertragens der Erregerkraft *F*_{*exc*} auf das Meßrohr 13 weist die Erregeranordnung 16 im Ausführungsbeispiel, wie in Fig. 4 dargestellt, eine starre, elektromagnetisch und/oder elektrodynamisch angetriebene Hebelanordnung 15 mit einem am Meßrohr 13 biegefest fixierten Ausleger 154 und mit einem Joch 163 auf. Das Joch 163 ist an einem vom Meßrohr 13 beabstandeten Ende des Auslegers 154 ebenfalls biegefest fixiert, und zwar so, daß es oberhalb des Meßrohrs 13 und quer zu ihm angeordnet ist. Als Ausleger 154 kann z.B. eine metallische Scheibe dienen, die das Meßrohr 13 in einer Bohrung aufnimmt. Für weitere geeignete Ausführungen der Hebelanordnung 15 sei an dieser Stelle auf die bereits erwähnte US-A 60 06 609 verwiesen. Die, hier T-förmige, Hebelanordnung 15 ist bevorzugt, wie in Fig. 2 ohne weiteres erkennbar ist, so angeordnet, daß sie etwa in der Mitte zwischen Einlaß- und Auslaßende 11,12 auf das Meßrohr 13 einwirkt, wodurch dieses im Betrieb mittig seine größte laterale Auslenkung ausführt.

Zum Antreiben der Hebelanordnung 15 umfaßt die Erregeranordnung 16 gemäß Fig. 4 eine erste Erregerspule 26 und einen zugehörigen ersten dauermagnetischen Anker 27 sowie eine zweite Erregerspule 36 und einen zugehörigen zweiten dauermagnetischen Anker 37. Die beiden, elektrisch bevorzugt in Reihe geschalteten, Erregerspulen 26, 36 sind beiderseits des Meßrohrs 13 unterhalb des Jochs 163 am Tragrahmen 14, insb. lösbar, so fixiert, daß sie mit ihrem jeweils zugehörigen Anker 27 bzw. 37 im Betrieb in Wechselwirkung stehen; im übrigen können die beiden Erregerspulen 26, 36, falls erforderlich, selbstverständlich auch zueinander parallel geschaltet sein.

Wie in Fig. 2 und 4 dargestellt, sind die beiden Anker 27, 37 derart voneinander beabstandet am Joch 163 fixiert, daß im Betrieb des Meßaufnehmers 10 der Anker 27 im wesentlichen von einem Magnetfeld der Erregerspule 26 und der Anker 37 im wesentlichen von einem Magnetfeld der Erregerspule 36 durchsetzt und aufgrund entsprechender elektrodynamischer und/oder elektromagnetischer Kraftwirkungen bewegt wird.

Die mittels der Magnetfelder der Erregerspulen 26, 36 erzeugten Bewegungen der Anker 27, 37 werden via Joch 163 und Ausleger 154 auf das Meßrohr 13 übertragen. Diese Bewegungen der Anker 27, 37 sind so ausgebildet, daß das Joch 163 alternierend in Richtung der Seitenplatte 24 oder in Richtung der Seitenplatte 34 aus seiner Ruhelage ausgelenkt wird. Eine entsprechende, zur bereits erwähnten Meßrohrmittelachse 13B parallele Drehachse der Hebelanordnung 15 kann z.B. durch den Ausleger 154 verlaufen.

Insbesondere zum Haltern der Erregerspulen 26, 36 und ggf. einzelner Komponenten einer weiter unten genannten Magnetbremsanordnung 217 umfaßt der Tragrahmen 14 ferner bevorzugt eine mit den Seitenplatten 24, 34, insb. lösbar, verbundene Halterung 29 für die elektromechanische Erregeranordnung 16.

Beim Meßaufnehmer 10 des Ausführungsbeispiels bewirken die lateralen Auslenkungen des am Einlaßende 11 und am Auslaßende 12 fest eingespannten, vibrierenden Meßrohrs 13 gleichzeitig eine elastische Verformung seines Meßrohrlumens 13A, die praktisch über die gesamte Länge des Meßrohrs 13 ausgebildet ist.

Ferner wird beim Meßwertaufnehmer des Ausführungsbeispiels im Meßrohr 13 aufgrund eines via Hebelanordnung 15 auf dieses wirkenden Drehmoments gleichzeitig zu den lateralen Auslenkungen zumindest abschnittsweise eine torsionale Verdrehung um die Meßrohrmittelachse 13B erzwungen, so daß dieses praktisch in einem als Nutzmode dienenden gemischten Biegeschwingungs-Torsionsmode schwingt. Die Verdrehung des Meßrohrs 13 kann dabei so ausgebildet sein, daß eine laterale Auslenkung des vom Meßrohr 13 beabstandeten Ende des Auslegers 154 entweder gleich oder entgegen gerichtet zur lateralen Auslenkung des Meßrohrs 13 ist. Anders gesagt, das Meßrohr 13 kann Torsionsschwingungen in einem dem ersteren Fall entsprechenden ersten Biegeschwingungs-Torsionsmode oder in einem dem letzteren Fall entsprechenden zweiten Biegeschwingungs-Torsionsmode ausführen, wobei beim Meßaufnehmer 10 gemäß dem Ausführungsbeispiel die natürliche Resonanzfrequenz des zweiten Biegeschwingungs-Torsionsmodes von z.B. 900 Hz annährend doppelt so hoch ist wie die des ersten Biegeschwingungs-Torsionsmodes.

Für den bevorzugten Fall, daß das Meßrohr 13 betriebsmäßig Schwingungen lediglich im zweiten Biegeschwingungs-Torsionsmode ausführen soll, ist in vorteilhafter Weise eine auf dem Wirbelstromprinzip beruhende Magnetbremsanordnung 217 in die Erregeranordnung 16 integriert, die dazu dient, die Lage dieser Drehachse zu stabilisieren. Mittels der Magnetbremsanordnung 217 kann somit sichergestellt werden, daß das Meßrohr 13 stets im zweiten Biegeschwingungs-Torsionsmode schwingt und somit allfällige äußere Störeinflüsse auf das Meßrohr 13 nicht zu einem spontanen Wechsel in einen anderen, insb. auch nicht in den ersten, Biegeschwingungs-Torsionsmode führen. Einzelheiten einer solchen Magnetbremsanordnung sind z.B. in der US-A 60 06 609 ausführlich beschrieben; ferner ist die Verwendung von derartigen Magnetbremsanordnungen bereits von Meßaufnehmern der erwähnten Serie "PROMASS l" bekannt.

Es sei an dieser Stelle noch erwähnt, daß bei dem auf diese Weise gemäß dem zweiten Biegeschwingungs-Torsionsmode ausgelenkten Meßrohr 13 die gedachte Meßrohrmittelachse 13B praktisch leicht deformiert wird und somit bei den Schwingungen keine Ebene sondern eine schwach gewölbte Fläche aufspannt. Ferner weist eine in dieser Fläche liegende, durch den Mittelpunkt der Meßrohrmittelachse beschriebene Bahnkurve die kleinste Krümmung aller durch die Meßrohrmittelachse beschriebenen Bahnkurven auf.

Zum Detektieren der Verformungen des Meßrohrs 13 umfaßt der Meßaufnehmer 10 ferner eine Sensoranordnung 60, die mittels wenigstens eines auf Vibrationen des Meßrohrs 13 reagierenden ersten Sensors 17 ein diese repräsentierendes erstes, insb. analoges, Sensorsignal s₁ erzeugt. Der Sensor 17 kann z.B., wie bei derartigen Meßaufnehmern üblich, mittels eines am Meßrohr 13 fixierten und mit einer vom Tragrahmen 14 gehalterten Sensorspule in Wechselwirkung stehenden dauermagnetischen Ankers gebildet sein.

Als Sensor 17 sind besonders solche geeignet, die basierend auf dem elektrodynamischen Prinzip, eine Geschwindigkeit der Auslenkungen des Meßrohrs erfassen. Es können aber z.B. auch beschleunigungsmessende elektrodynamische oder aber auch wegmessende resistive oder optische Sensoren verwendet werden. Selbstverständlich können aber auch andere dem Fachmann bekannte und für die Detektion solcher Vibrationen geeignete Sensoren verwendet werden.

Nach einer bevorzugten Ausgestaltung der Erfindung umfaßt die Sensoranordnung 60 ferner einen, insb. zum ersten Sensor 17 identischen, zweiten Sensor 18, mittels dem sie ein ebenfalls Vibrationen des Meßrohrs repräsentierendes zweites Sensorsignal s₂ liefert. Die beiden Sensoren 17, 18 sind bei dieser Ausgestaltung entlang des Meßrohrs 13 voneinander beabstandet, insb. auch in einem gleichen Abstand von der Mitte des Meßrohrs 13, so im Meßaufnehmer 10 angeordnet, daß mittels der Sensoranordnung 60 sowohl einlaßseitige als auch auslaßseitige Vibrationen des Meßrohrs 13 örtlich erfaßt und in die entsprechenden Sensorsignale s₁ bzw. s₂ abgebildet werden.

Das erste und ggf. das zweite Sensorsignal s₁ bzw. s₂, die üblicherweise jeweils eine der momentanen Schwingfrequenz des Meßrohrs 13 entsprechende Signalfrequenz aufweisen, sind der hier nicht dargestellten Meßgerät-Elektronik zugeführt.

Zum Vibrierenlassen des Meßrohrs 13 wird die Erregeranordnung 16 mittels eines von der Meßgerät-Elektronik gelieferten, gleichfalls oszillierenden, unipolaren oder bi-polaren, Erregerstroms i_{exc} von einstellbarer Amplitude und von einstellbarer Erregerfrequenz f_{exc} derart gespeist, daß die Erregerspulen 26, 36 im Betrieb von diesem durchflossen sind und in entsprechender Weise die zum Bewegen der Anker 27, 37 erforderlichen Magnetfelder erzeugt werden. Somit kann die für das Vibrierenlassen des Meßrohrs 13 erforderliche Erregerkraft *F*_{*exc*} in der dem Fachmann bekannten Weise, z.B. anhand der Sensorsignale s₁ bzw. s₂ mittels einer Strom-und/oder Spannungs-Regelschaltung, hinsichtlich ihrer Amplitude und z.B. mittels einer Phasen-Regelschleife hinsichtlich ihrer Frequenz, überwacht und eingestellt werden. Der von der Meßgerät-Elektronik gelieferte Erregerstrom i_{exc} ist bevorzugt sinusförmig ausgebildet; er kann aber z.B. auch ein pulsierender, ein dreieckförmiger oder ein rechteckförmiger Wechselstrom sein.

Die Erregerfrequenz f_{exc} des Erregerstroms i_{exc} entspricht, wie bei Vibrations-Meßgeräten der beschriebenen Art üblich, der vorgegebenen Schwingfrequenz des Meßrohrs 13 und ist daher bevorzugt auf eine momentane natürliche Resonanzfrequenz des fluidführenden Meßrohrs 13 eingestellt.

Es sei noch erwähnt, daß für den Fall, daß als Meßaufnehmer ein magnetischinduktiver Durchflußaufnehmer dient, anstelle der oben gezeigten Erregeranordnung in der dem Fachmann bekannten Weise eine Spulenanordnung als Erregeranordnung verwendet wird, die, von einem Erregerstrom durchflossen, ein Magnetfeld in das Fluid im Meßrohr einkoppelt. In entsprechender Weise dient dann als Sensoranordnung eine spannungsabgreifende Elektrodenanordnung, die eine im Fluid mittels des oben erwähnten Magnetfelds induzierte Meßspannung auskoppelt.

Für den Fall, daß als Meßaufnehmer ein Ultraschall-Durchflußaufnehmer dient, wird in der dem Fachmann bekannten Weise ein Ultraschallwandler als Erregeranordnung verwendet, die, von einem Erregerstrom durchflossen, Ultraschallwellen in das Fluid im Meßrohr einkoppelt. Ebenso dient dann auch üblicherweise ein Ultraschallwandler als Sensoranordnung, der Ultraschallwellen aus dem Fluid auskoppelt und in eine entsprechende Meßspannung umwandelt.

Da es sich bei dem in den Fig.1 bis 4 gezeigten Meßaufnehmer 10 praktisch um einen Mehrgrößen-Meßaufnehmer handelt mit dem alternierend oder auch simultan z.B. der Massedurchfluß *m* anhand der beiden Sensorsinale s₁, s₂ und/oder die Dichte ρ anhand der Erregerfrequenz f_{exc} und/oder die Viskosität, η, des Fluids anhand des Erregerstroms i_{exc} detektiert werden können, wird im folgenden zur weiteren Erläuterung der Erfindung die Sensorsignale, der Erregerstrom oder auch die oben erwähnten Meßspannungen im Sinne einer besseren Einheitlichkeit und Übersichtlichkeit unter dem Begriff "Meßsignal" zusammengefaßt.

Wie bereits erwähnt, haben Untersuchungen ergeben, daß das mit dem zu messenden Parameter korrespondierende Meßsignal, also z.B. das Sensorsignal s₁ oder auch der Erregerstrom i_{exc}, in einem erheblichen Maße von einer momentanen Dichteverteilung im im Meßrohr 13 strömenden Fluid, insb. aber von einer Konzentration und einer Verteilung allfälliger parasitärer Inhomogenittäten, beinflußt werden können. Zur Verbesserung der Meßsignale, insb. auch zur Erhöhung ihrer Robustheit gegenüber solchen Inhomogenitäten, sind erfindungsgemäß in einem Einlaßbereich des Meßaufnehmers 10 oder zumindest in dessen Nähe Mittel vorgesehen sind, die einen Drall im einströmenden Fluid und somit im innerhalb des Meßrohrlumens strömenden Fluid eine Rotationsbewegung relativ zum Meßrohr 13 um eine in Strömungsrichtung liegende imaginäre Rotationsachse bewirken, die für den bevorzugten Fall eines geraden Meßrohrs praktisch mit der Meßrohrmittelachse 13B zusammenfällt.

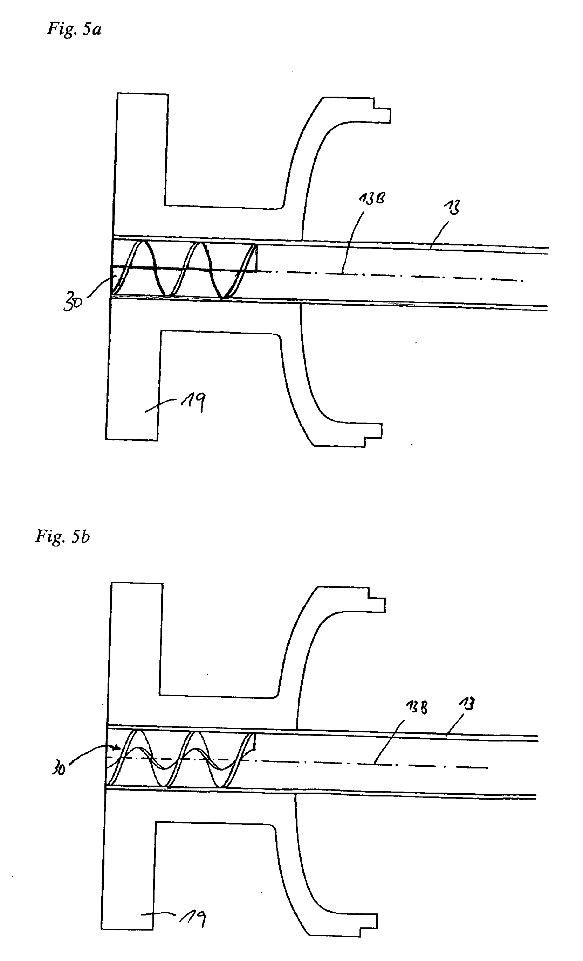

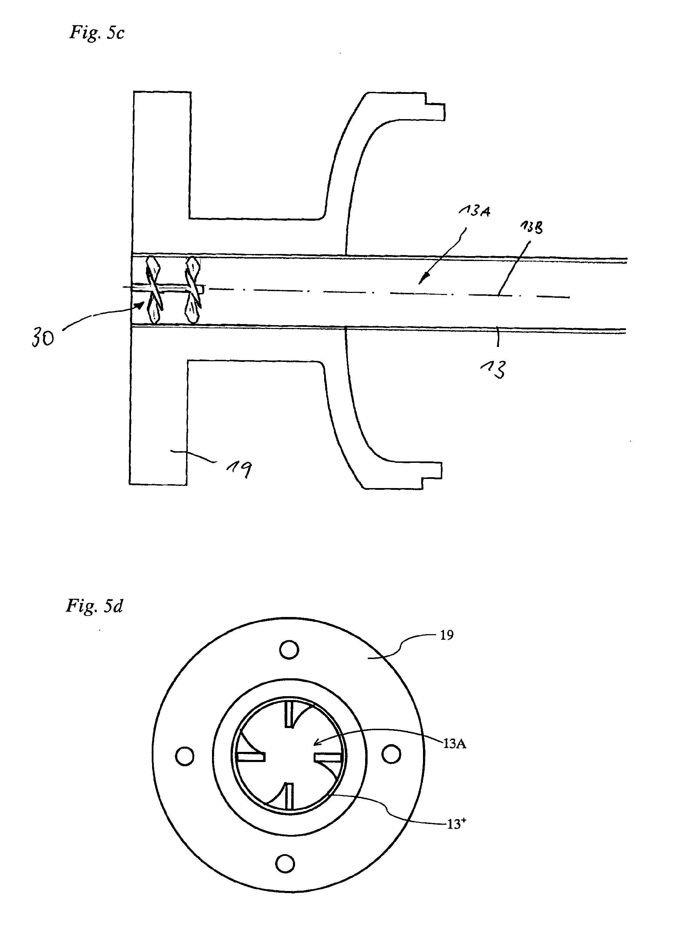

Nach einer bevorzugten Ausgestaltung der Erfindung umfassen die Mittel zum Bewirken des Dralls wenigstens einen in das strömende Fluid hineinragenden Verwirbler 30. Der bevorzugt im Rohrlumen ruhende Verwirbler 30 kann z.B. ein separates, propellerförmiges, helix- oder auch schneckenförmiges Bauteil sein, das wie in den Fig. 5a bis d angedeutet, zumindest anteilig im Einlaßrohrstück 13⁺ oder z.B. auch zumindest anteilig direkt im Meßrohr 13 angeordnet ist. Insbesondere für den Fall, daß die Mittel zum Bewirken des Dralls, wie in Fig. 5a und 5b dargestellt, inform eines helix- oder auch schneckenförmigen Bauteils ausgebildet sind, können diese unter mechanischer Spannung gehalten in das Einlaßrohrstück 13⁺ und/oder das Meßrohr 13 eingeschoben und so mittels Federkraft gegen die jeweilige Innenwand gedrückt gehalten sein.

Es sei an dieser Stelle noch erwähnt, daß die Mittel zum Erzeugen des Dralls, insb. der als separates Bauteil ausgebildete Verwirbler 30, zumindest teilweise auch innerhalb der das Fluid dem Meßaufnehmer 10 zuführenden Rohrleitung angeordnet sein können. Ferner können die Mittel zum Erzeugen des Dralls z.B. auch durch einen mehrfach abgewinkelten Abschnitt der Rohrleitung gebildet sein.

Nach einer weiteren bevorzugten Ausgestaltung der Erfindung umfaßt der Verwirbler 30 wenigstens ein schräg in das strömende Fluid hineinragendes, insb. nach der Art einer Turbinen-Drallschaufel geformtes, Leitblech 30a. Vorzugsweise umfaßt der Verwirbler zwei oder mehr solcher Leitbleche 30a, 30b, 30c, 30d, die, wie in Fig. 4d angedeutet, so angeordnet sind, daß der Verwirbler 30, beispielsweise nach der Art eines Turbinenstators, inform eines Leitrads ausgebildet ist. Das wenigstens eine Leitblech 30a ist vorzugsweise an der Innenwand des Einlaßrohrstücks 13⁺ fixiert; falls erforderlich kann es aber z.B. auch an der Innenwand der das Fluid zuführenden Rohrleitung angebracht sein.

Nach einer anderen bevorzugten Ausgestaltung der Erfindung sind die Mittel zum Bewirken des Dralls nach der Art eines gezogenen Laufs als in die Innenwand des Einlaßrohrstücks 13⁺ und/oder des Meßrohrs 13 eingeformter Zug ausgebildet.

Untersuchungen haben ferner ergeben, daß die Mittel zum Bewirken des Dralls vorteilhafterweise in Strömungsrichtung eine wirksame Länge aufweisen sollten, die mindestens gleich einer Nennweite der Rohrleitung ist. Desweiteren konnten besonders gute Meßergebnisse auch dann erzielt werden, wenn eine aus dem Einbau des Verwirblers 30 resultierende Verkleinerung im effektiven Querschnitt des Einlaßrohrstücks 13⁺ und/ oder der Rohrleitung entweder sehr gering gehalten oder aber durch eine Vergrößerung von deren jeweiligen nominalen Querschnitt kompensiert worden ist.

Ein besonderer Vorteil der Erfindung ist darin zu sehen, daß der die Mittel zum Bewirken des Dralls verwendende Meßaufnehmer praktisch in jeder beliebigen Einbaulage, insb. auch in den Verlauf einer im wesentlichen waagerechten Rohrleitung eingebaut, bei im wesentlichen gleichbleibender Meßgenauigkeit betrieben werden kann.

Ein weiterer Vorteil der Erfindung besteht auch darin, daß bei deren Anwendung auf Meßaufnehmer vom Vibrationstyp zum Vibrierenlassen des Meßrohrs 13 ein im Vergleich zu herkömmlichen Meßaufnehmern erheblich niedrigerer Erregerstrom i_{exc} und damit ein geringerer Energieaufwand erforderlich ist, insb. auch bei einem hohen Anteil an gasförmigen Inhomogenitäten im zu messenden Fluid.

## Patentansprüche

1. Verfahren zum Messen von wenigstens einem physikalischen Parameter, insb. eines Massedurchflusses *m* und/oder einer Dichte ρ und/oder einer Viskosität η, eines in einer Rohrleitung strömenden Fluids, welches Verfahren folgende Schritte umfaßt:
- Bewirken eines Dralls im strömenden Fluid um eine mit einer Strömungsrichtung fluchtende Drallachse (13B) zum Erzwingen einer zur Drallachse möglichst rotationssymmetrischen Dichteverteilung im Fluid,
- Strömenlassen des um die Drallachse rotierenden Fluids durch wenigstens ein Meßrohr (13) eines in die Rohrleitung eingefügten Meßaufnehmers (10) zum Erzeugen von mit dem zu messenden Parameter korrespondierenden Reaktionen im Fluid sowie
- Erfassen von Reaktionen im Fluid zum Erzeugen wenigstens eines vom zu messenden Parameter beeinflußten Meßsignals (s₁, s₂, i_{exc}).

2. Verfahren nach Anspruch 1, das folgende weitere Schritte umfaßt:
- Vibrierenlassen des Fluid führenden Meßrohrs (13) zum Erzeugen von mit dem zu messenden Parameter korrespondierenden und auf das vibrierende Meßrohr (13) zurückwirkenden Reaktionskräften im zu messenden Fluid und
- Erfassen von Vibrationen des Meßrohrs (13) zum Erzeugen des wenigstens einen Meßsignals (s₁, s₂, i_{exc}).

3. Meßaufnehmer (10) zum Erzeugen wenigstens eines Meßsignals (s₁, s₂, i_{exc}), das mit wenigstens einem physikalischen Parameter eines in einer Rohrleitung strömenden Fluids korrespondiert, welcher Meßaufnehmer (10) umfaßt:
- wenigstens ein Meßrohr (13) von vorgebbarem Meßrohrlumen zum Führen des Fluids, welches Meßrohr (13) einlaßseitig und auslaßseitig mit der Rohrleitung kommuniziert und
- eine Erregeranordnung (16) zum Bewirken von sensorisch erfaßbaren Reaktionen im Fluid innerhalb des wenigstens einen Meßrohrs (13) sowie
- eine Sensoranordnung (60) zum Erfassen der Reaktionen im Fluid, die das Meßsignal (s₁, s_{2,} i_{exc}) liefert,
- wobei in einem Einlaßbereich des Meßaufnehmers (10) oder zumindest in dessen Nähe Mittel vorgesehen sind, die einen Drall im einströmenden Fluid und somit im innerhalb des Meßrohrlumens strömenden Fluid eine Rotationsbewegung relativ zum Meßrohr (13) um eine in Strömungsrichtung liegende imaginäre Rotationsachse (13B) bewirken.

4. Meßaufnehmer nach Anspruch 3,
- bei dem das wenigstens eine Meßrohr (13) einlaßseitig über ein Einlaßrohrstück (13⁺) und auslaßseitig über ein Auslaßrohrstück (13^{#}) mit der Rohrleitung kommuniziert und
- bei dem die Mittel zum Bewirken des Dralls zumindest anteilig innerhalb des Einlaßrohrstücks (13⁺) angeordnet sind.

5. Meßaufnehmer nach einem der Ansprüche 3 bis 4, bei dem die Mittel zum Bewirken des Dralls wenigstens einen in das strömende Fluid hineinragenden, insb. ruhenden, Verwirbler (30) umfassen.

6. Meßaufnehmer nach einem der Ansprüche 3 bis 5, bei der Verwirbler (30) wenigstens ein in das strömende Fluid hineinragendes Leitblech (30a) umfaßt.

7. Meßaufnehmer nach einem der Ansprüche 3 bis 6, bei dem der Verwirbler (30) propellerförmig ausgebildet ist.

8. Meßaufnehmer nach einem der Ansprüche 3 bis 7, bei dem der Verwirbler (30) helixförmig, insb schneckenförmig, ausgebildet ist.

9. Meßaufnehmer nach einem der Ansprüche 3 bis 8,
- bei dem das wenigstens eine Meßrohr (13) im Betrieb zum Erzeugen von im Fluid wirkenden Reaktionskräften mittels der Erregeranordnung (16) vibrierengelassen wird und
- bei dem mittels der Sensoranordnung (60) Vibrationen des Meßrohrs (13) erfaßt werden.

10. Meßgerät zum Messen wenigstens eines physikalischen Parameters eines in einer Rohrleitung strömenden Fluids, insb. geeignet zur Realsierung des Verfahrens gemäß Anspruch 1 oder 2, mit einem Meßaufnehmer (10) gemäß einem der Ansprüche 3 bis 9.
